# EUROPEAN PATENT SPECIFICATION

(11) **EP 3 879 829 B1**
(45) Date of publication and mention of the grant of the patent: **18.11.2026**
(21) Application number: 21164841.5
(22) Date of filing: 10.01.2013
(51) Int. Cl.: H04N 19/172, H04N 19/423, H04N 19/523, H04N 19/59, H04N 19/82

(54) **METHOD AND DEVICE FOR CODING AN IMAGE BLOCK, CORRESPONDING METHOD AND DECODING DEVICE**
VERFAHREN UND VORRICHTUNG ZUR CODIERUNG EINES BILDBLOCKS, ENTSPRECHENDES VERFAHREN UND DECODIERUNGSVORRICHTUNG
PROCÉDÉ ET DISPOSITIF DE CODAGE D'UN BLOC D'IMAGE, PROCÉDÉ CORRESPONDANT ET DISPOSITIF DE DÉCODAGE

(30) Priority: 13.01.2012 FR 1250334
(43) Date of publication of application: 15.09.2021
(62) Document number(s) of the earlier application(s) in accordance with Art. 76 EPC: 13700112.9 / 2 803 191
(73) Proprietor: InterDigital Madison Patent Holdings, SAS, 75017 Paris (FR)
(72) Inventor: BORDES, Philippe, 35576 Cesson-Sévigné (FR); ANDRIVON, Pierre, 35576 Cesson-Sévigné (FR); SALMON, Philippe, 35576 Cesson-Sévigné (FR)
(74) Representative: Interdigital

(56) References cited:
- EP-A2- 1 209 916
- SANG HEON LEE ET AL: "Hybrid Resolution Switching Method for Low Bit Rate Video Coding", IMAGE PROCESSING, 2007. ICIP 2007. IEEE INTERNATIONAL CONFERENCE ON, IEEE, PI, 1 September 2007 (2007-09-01), pages VI - 73, XP031158265, ISBN: 978-1-4244-1436-9
- DAVIES (CISCO) T: "Resolution switching for coding efficiency and error resilience", 6. JCT-VC MEETING; 97. MPEG MEETING; 14-7-2011 - 22-7-2011; TORINO; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-F158, 15 July 2011 (2011-07-15), XP030009181
- HAN J-K ET AL: "Joint Optimization of the Motion Estimation Module and the Up/Down Scaler in Transcoders", IEEE TRANSACTIONS ON CIRCUITS AND SYSTEMS FOR VIDEO TECHNOLOGY, IEEE SERVICE CENTER, PISCATAWAY, NJ, US, vol. 15, no. 10, 1 October 2005 (2005-10-01), pages 1303 - 1313, XP011139788, ISSN: 1051-8215, DOI: 10.1109/TCSVT.2005.854211

## Description

### 1. Scope of the invention

The invention relates to the general domain of image coding.

The invention more particularly relates to a method for reconstructing an image block from a current image and a method for coding such a block from a block of a reference image reconstructed at a different size from the size of the current image. The invention also relates to the corresponding decoding and coding devices.

### 2. Prior art

It is known to code a sequence of images to quantize with a quantization step the image data before their coding with view to reduce the output bitrate of the coder. Traditionally, the coder comprises a bitrate control module able to adapt the value of the quantization step so as to obtain the best compromise between the output bitrate of the coder and the distortion of the image signal. When the intended output bitrate or target bitrate is low, greatly increasing the quantization step is not always the best adapted solution as it generally leads to a significant increase in the distortion of the image signal.

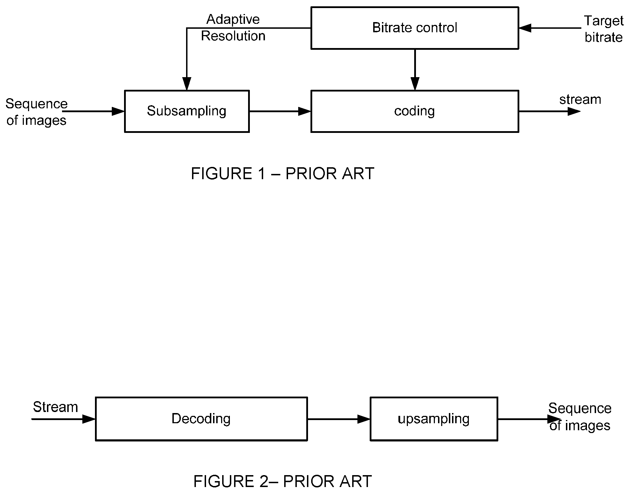

Hence, it is known at low bitrates to reduce the size of the image to code by subsampling before coding as illustrated in figure 1. In this case, the decoder subsamples the decoded image before its display as shown in figure 2. For this purpose, the coded stream comprises a field specifying the size of the original image of the coded image. This dynamic adaptation of the size of the image is known in English terminology as adaptive resolution.

An example prior art of a method for low bitrate coding is SANG HEON LEE ET AL: "Hybrid Resolution Switching Method for Low Bit Rate Video Coding",IMAGE PROCESSING, 2007. ICIP 2007. IEEE INTERNATIONAL CONFERENCE ON, IEEE, PI, 1 September 2007, pages VI-73 which considers encoding I pictures in high resolution and B and P pictures in low resolution.

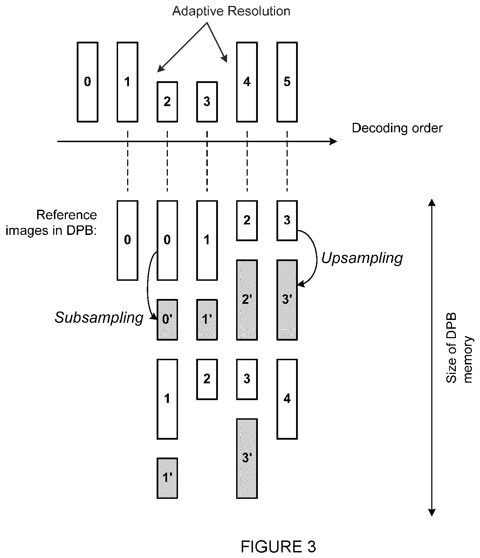

As illustrated in figure 3, the adaptive resolution of the size of the image requires the storage in DPB memory (Decoded Picture Buffer) of reconstructed reference images at different sizes. Indeed, the reconstructed images used as reference images are stored in the DPB memory. In the case of the Inter coding mode, the stored reference images are used to determine motion compensated reference blocks. In the particular case of the adaptive resolution method, the reference image used for the motion compensation and the current image to code or to reconstruct from this reference image can be of a different size. Hence, when the reference image has a size less than (respectively greater than) the size of the current image, the reference image must be upsampled (respectively subsampled) to the size of the current image before being motion compensated. The subsampled or upsampled version of the reference image is also stored in the DPB memory. More generally, each reference image is stored in the DPB memory with N different sizes, N being an integer representing the number of sizes allowed by the adaptive resolution method.

In the example referred to in figure 3, the last two reconstructed images are used as reference image for the current image. Hence, the image 2 uses the images 0 and 1 as reference images, the image 3 uses the images 1 and 2 as reference images, etc. In this example, N=2. The upsampled and subsampled versions of the reconstructed reference images are greyed out in figure 3 and correspond to the additional reference images stored in the DPB memory. The reference images not greyed out are the reconstructed reference images.

The adaptive resolution method thus requires more memory space as several versions (reconstructed image and upsampled and/or subsampled versions) of a same reference image are stored. Increasing the memory size is a problem notably in the hardware implementations for which the surface of the component is notably critical.

### 3. Summary of the invention

The purpose of the invention is to overcome at least one of the disadvantages of the prior art.

The invention is defined in the appended claims. The embodiments, except the ones related to the claims, refer to examples useful for understanding the invention but which do not represent embodiments of the present claimed invention. These examples are given for illustrative purpose only.

### 4. List of figures

The invention will be better understood and illustrated by means of non-restrictive embodiments and advantageous implementations, with reference to the accompanying drawings, wherein:
- figure 1 illustrates a coding device with adaptive resolution according to the prior art,
- figure 2 illustrates a decoding device with adaptive resolution according to the prior art,
- figure 3 represents a sequence of 5 images to reconstruct and the change in the composition of the DPB memory of reference images when the last two reconstructed images are used as reference images,
- figure 4 illustrates the ¼ pixel interpolation of an image block,
- figure 5 illustrates a horizontal and vertical upsampling technique of an image,
- figure 6 illustrates a method for reconstructing an image block according to the invention,
- figure 7 illustrates a matching of pixels of the current image with pixels of the reference image according to the invention,
- figure 8 illustrates the motion compensation method according to the invention,
- figure 9 illustrates a method for coding an image block according to the invention,
- figure 10 illustrates a horizontal and vertical subsampling technique of an image,
- figure 11 illustrates a matching of pixels of the current image with pixels of the reference image according to an embodiment variant,
- figure 12 illustrates a coding device according to the invention, and
- figure 13 illustrates a decoding device according to the invention.

### 5. Detailed description of the invention

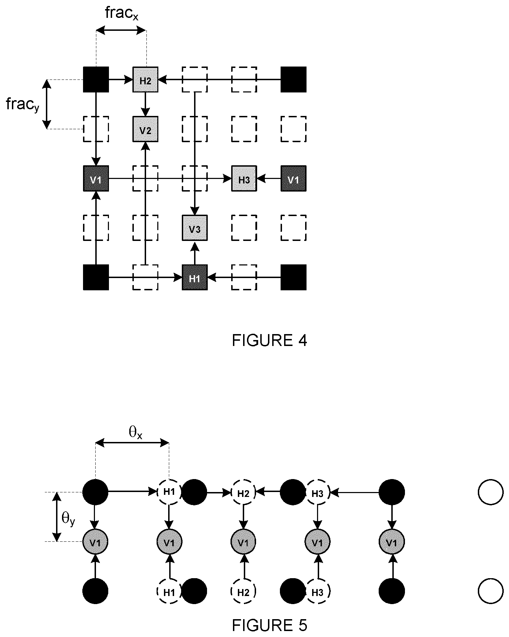

The 2D interpolation filters used for the motion compensation and the 2D upsampling and subsampling filters are generally separable filters. Hence, each 2D filter is divided into a 1D vertical filter and a 1D horizontal filter, which are successively applied to the columns and lines of a pixel block or of an image. It is immaterial to apply first the horizontal filter on the lines then the vertical filter on the columns or conversely to apply first the vertical filter on the columns then the horizontal filter on the lines. The separable interpolation filters typically used for motion compensation are noted MCIF (Motion Compensation Interpolation Filter) and are composed of a vertical filter noted MCIF_{V}(frac_{y}) and a horizontal filter noted MCIF_{H}(fracₓ). (fracₓ,frac_{y}) represents the non-integer part of the position of the pixel to interpolate in relation to the initial grid of pixels or even the fractional part of the motion vector used for the motion compensation. For example, in the case of a ¼ pixel motion compensation, fracₓ 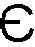 {0 ,0.25,0.5,0.75} and frac_{y} 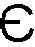 {0 ,0.25,0.5,0.75} as illustrated in figure 4. The motion compensation of a pixel block of a reference image is thus obtained by successively applying the filters MCIF_{H}(fracₓ) and MCIF_{V}(frac_{y}).

The black squares represent the initial grid of pixels, the other squares represent pixels interpolated by means of the filters MCIF_{H}(fracₓ) and MCIF_{V}(frac_{y}). Hence, the pixel H2 is obtained from at least two black pixels located on the same line by applying the filter MCIF_{H}(0.25). For example, the following filters can be used to interpolate with frac_{XorY} = 0, ¼, ½, ¾:
{ 0, 0, 0, 64, 0, 0, 0, 0 } / 64 with frac_{XorY} = 0,
{ -1, 4, -10, 57, 19, -7, 3, -1 } / 64 with frac_{XorY} = ¼,
{ -1, 4, -11, 40, 40, -11, 4, -1 } / 64 with frac_{XorY} = ½,
{ -1, 3, -7, 19, 57, -10, 4, -1 } / 64 with frac_{XorY} = ¾.

In the same manner, each upsampling and subsampling filter SCF(n) is separable and is composed of a vertical filter noted SCF_{H}(n,θₓ) and a horizontal filter noted SCF_{V}(n,θ_{y}). (θₓ;θ_{y}) represents the position of the upsampled or subsampled pixel in relation to the initial grid of pixels of the reference image. In figure 5, the black dots represent the initial grid of pixels. The pixel H1 is obtained from at least two black pixels located on the same line and surrounding it by applying the filter SCF_{H}(n,θₓ).

The index n corresponds to a size combination of a reference image such as reconstructed and of a current image to reconstruct. If N image sizes are authorised by the adaptive resolution method, then n ∈[0;N.(N-1)-1]. in the particular case where N=3, i.e. that 3 image sizes are authorised by the adaptive resolution method then n ∈[0;5]. Indeed, there is a filter SCF_{H}(0,θₓ) to go from size 1 to size 2, a filter SCF_{H}(1,θₓ) to go from size 2 to size 1, a filter SCF_{H}(2,θₓ) to go from size 1 to size 3, a filter SCF_{H}(3,θₓ) to go from size 3 to size 1, a filter SCF_{H}(4,θₓ) to go from size 2 to size 3 and a filter SCF_{H}(5,θₓ) to go from size 3 to size 2.

The upsampling or subsampling of a reference image is thus obtained by successively applying the filters SCF_{H}(n,θₓ) and SCF_{V}(n,θ_{y}) on the lines and columns of the image.

For example, the filter {1, -3, 0, 10, 10, 0, -3, 1} / 16 is used to subsample the image data by 2. In this particular case the filter is independent from the phase. The filter {-1, 5, 5, -1} / 8 is used to subsample the image data by 2 when θₓ or θ_{y}=0.5 and {0, 8, 0, 0} / 8 when θₓ or θ_{y}=0.

In the prior art, it is thus known to apply the filters SCF_{H}(n,θₓ) and SCF_{V}(n,θ_{y}) on the reconstructed reference images with a view to generating upsampled and/or subsampled images which are stored in the DPB memory. In reference to figure 3, the reconstructed reference image 1 is stored DPB memory then it is subsampled in an image 1' with the filters SCF_{H}(nₐ,θₓ) and SCF_{V}(nₐ,θ_{y}) which is also stored in the DPB memory. Likewise, the reconstructed reference image 2 is stored in DPB memory then it is upsampled in an image 2' with the filters SCF_{H}(n_{b},θₓ) and SCF_{V}(n_{b},θ_{y}) which is also stored in the DPB memory. nₐ and n_{b} are particular values of n. A current block of the current image is reconstructed from a block belonging to one of the reference images stored in the DPB memory of the same size of the current image. Hence, if the current block belongs to the image 2 on figure 3 and is coded in Inter mode from a block of the subsampled image 1, i.e. from the image 1', then the reference block in the image 1' is motion compensated by applying the filters MCIF_{H}(fracₓ) and MCIF_{V}(frac_{y}). In this approach, the motion compensation is carried out on a reference block belonging to a reference image possibly upsampled and/or subsampled of the same size as the current image.

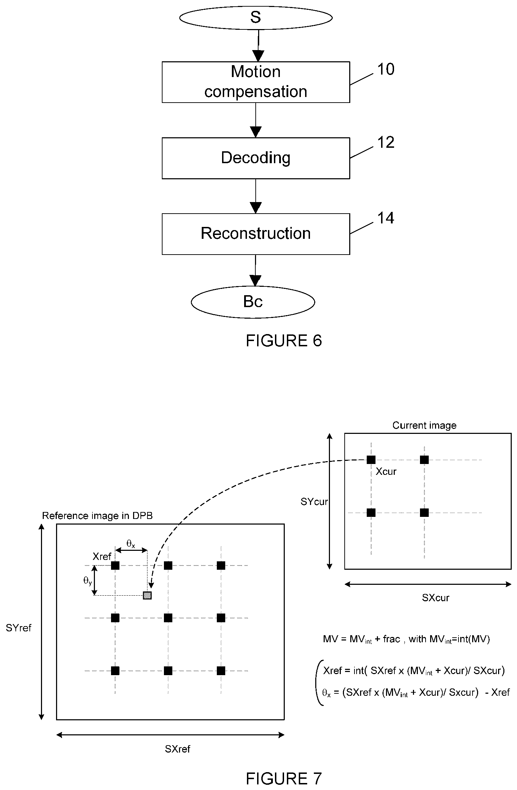

The invention relates to a method for reconstructing a current pixel block of a current image from at least one block of a reconstructed reference image at a different size from the size of the current image. The reconstruction method is described with reference to figure 6. According to the invention, only the reconstructed reference images are stored in the DPB memory, i.e. the images not greyed out in figure 3. In particular, no other upsampled or subsampled version is stored.

During a step 10, the reference block used to reconstruct the current block is motion compensated by means of filters GF_{H} and GFv to determine a prediction block Bp. The reference block is generally identified by means of a decoded motion vector MV of components (MVx, MVy).

According to the invention, the horizontal filters MCIF_{H} and SCF_{H} are grouped into a single filter GF_{H} applied on the lines of a pixel block. Likewise, the vertical filters MCIF_{V} and SCF_{V} are grouped into a single filter GF_{V} applied on the columns of a pixel block. ${GF}_{H} \left(n, {θ}_{x}{, frac}_{x}\right) = {MCIF}_{H} \left({frac}_{x}\right) ∘ {SCF}_{H} \left(n, {θ}_{x}\right)$ ${GF}_{V} \left(n, {θ}_{y}{, frac}_{y}\right) = {MCIF}_{V} \left({frac}_{y}\right) ∘ {SCF}_{V} \left(n, {θ}_{y}\right)$ where $\left(f∘h\right) \left(x\right) = f \left(h\left(x\right)\right) .$

"o" is the function composition operator. GF_{H} and GF_{V} are always 1D filters. By advantageously grouping, the filters for interpolation and resampling horizontally on the one hand and vertically on the other hand, no resampled reference image, i.e. over- or subsampled, is stored in the DPB memory in addition to the reconstructed reference image.

Hence, according to the invention the operations of upsampling or subsampling of the data of the reference image and of motion compensation of a reference block (to determine the prediction block Bp) are performed jointly by applying a separable interpolation filter successively on the lines and on the columns of pixels of the reference block, which filter depends on the 'n' index, i.e. on the size of the reference image and on the size of the current image.

For this purpose, to calculate the value of the pixels of the prediction block Bp Pred(Xcur,Ycur), the values Xref(Xcur),θₓ(Xcur), Yref(Ycur) and θ_{y}(Ycur) are calculated in the following manner as shown in figure 7: $MVx = {MVx}_{int} + {frac}_{x} , with {MVx}_{int} = int \left(MVx\right)$ $MVy = {MVy}_{int} + {frac}_{y} , with {MVy}_{int} = int \left(MVy\right)$ $Xref \left(Xcur\right) = int \left(SXref.\left({MVx}_{int}+Xcur\right)/SXcur\right)$ $Yref \left(Ycur\right) = int \left(SYref.\left({MVy}_{int}+Ycur\right)/SYcur\right)$ $θx \left(Xcur\right) = \left(SXref . \left({MVx}_{int}+Xcur\right)/SXcur\right) - Xref$ $θy \left(Ycur\right) = \left(SYref . \left({MVy}_{int}+Ycur\right)/SYcur\right) - Yref$

(Xref(Xcur), Yref(Ycur)) is the position in the reference image of the motion compensated current pixel with the integer part of MV.

(SXref, SYref ) represents the size of the reference image and (SXcur, SYcur) represents the size of the current image.

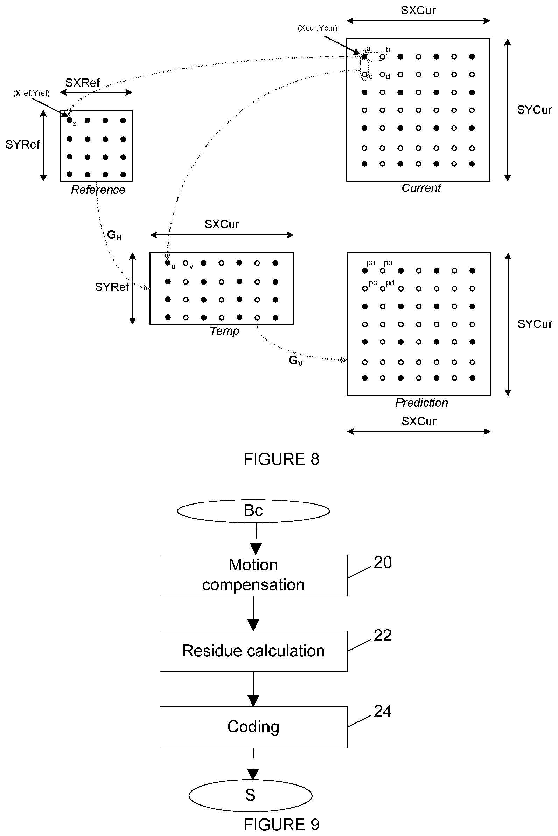

The filters GF_{H} and GF_{V} are then successively applied as shown in figure 8 to determine the prediction block Bp.

Two different current pixels (Xcur, Ycur) can be associated with the same pixel (Xref, Yref) in the reference image. They are then distinguished by their phase (θₓ, θ_{y}). Thus, to predict these two different pixels from the same reference pixel (Xref, Yref) two different filters are applied to the same pixels of the reference image according to the value of the phases.

In figure 8, the pixels {a,b,c,d} are all associated with the same value (Xref,Yref). They are distinguished by their phase:
θₓ(a) = θₓ(c)
θₓ(b) = θₓ(d)
θ_{y}(a) = θ_{y}(b)
θ_{y}(c) = θ_{y}(d)

The filters GF_{H} are first applied as follows:
u = GF_{H}(n, θₓ(a),fracₓ)(s)
v = GF_{H}(n, θₓ(b),fracₓ)(s)

The filters GF_{V} are then applied to determine the pixels of Bp:
pa = GF_{V}(n, θ_{y}(a),frac_{y})(u)
pb = GF_{V}(n, θ_{y}(b),frac_{y})(v)
pc = GF_{V}(n, θ_{y}(c),frac_{y})(u)
pd = GF_{V}(n, θ_{y}(d),frac_{y})(v)

According to a variant, GFv is applied before GF_{H}. For example, the filters can have the following values for an upsampling by two: ${GF}_{H or V} \left(n,{θ}_{x} or {θ}_{y}=0,{frac}_{XorY}=0\right) = \left\{0 0 64 0 0\right\} / 64$ ${GF}_{H or V} \left(n,{θ}_{x} or {θ}_{y}=0.5,{frac}_{XorY}=0\right) = \left\{-8 40 40-8 0\right\} / 64$ ${GF}_{H or V} \left(n, {θ}_{x} or {θ}_{y}=0,{frac}_{XorY}=1/4\right) = \left\{0 1 5 -42 499 64 -12 -3 0\right\} / 512$ ${GF}_{H or V} \left(n,{θ}_{x} or {θ}_{y}=0.5,{frac}_{XorY}=1/4\right) = \left\{ 0 -4 -45 232 399 -73 2 1 0 \right\} / 512$ ${GF}_{H or V} \left(n, {θ}_{x} or {θ}_{y}=0,{frac}_{XorY}=1/2\right) = \left\{0 1 6 -68 462 143 -28 -4 0\right\} / 512$ ${GF}_{H or V} \left(n,{θ}_{x} or {θ}_{y}=0.5,{frac}_{XorY}=1/2\right) = \left\{ 0 -4 -28 143 462-68 6 1 0 \right\} / 512$ ${GF}_{H or V} \left(n, {θ}_{x} or {θ}_{y}=0,{frac}_{XorY}=3/4\right) = \left\{0 1 2 -73 399 232 -45 -4 0\right\} / 512$ ${GF}_{H or V} \left(n, {θ}_{x} or {θ}_{y}=0.5{, frac}_{XorY}=3/4\right) = \left\{0 -3 -12 64 499 -49 5 1 0\right\} / 512$

During a step 12, a residue block is decoded for the current block. This residue block comes from the decoding of a binary stream representative of a block to reconstruct. Typically, this step comprises the decoding of binary data of the stream into coefficients. The coefficients thus obtained are generally dequantized using a quantization step then transformed into residues.

During a step 14, the current block is reconstructed from the motion compensated reference block, i.e. from the prediction block and the residue block. As an illustrative example, the current block is obtained by pixel to pixel addition of the prediction block and of the residue block or yet by weighted addition taking into account an illumination variation model.

The invention relates to a method for coding a current pixel block of a current image from at least one block of a reconstructed reference image at a different size from the size of the current image. The coding method is described with reference to figure 9. According to the invention, only the reconstructed reference images are stored in the DPB memory, i.e. the images not greyed out in figure 3. In particular, no other upsampled or subsampled version is stored.

During a step 20, the reference block used to code the current block is motion compensated by means of filters GF_{H} and GF_{V} to determine a prediction block Bp. The reference block is generally identified by means of a motion vector MV of components (MVx, MVy). MV is determined by a motion estimation method, for example of block matching type. According to the invention, the horizontal filters MCIF_{H} and SCF_{H} are grouped into a single filter GF_{H} applied on the lines of a pixel block. Likewise, the vertical filters MCIF_{V} and SCF_{V} are grouped into a single filter GF_{V} applied on the columns of a pixel block.
GF_{H}(n, θₓ,fracₓ) = MCIF_{H}(fracₓ) o SCF_{H}(n,θₓ)
GF_{V}(n, θ_{y},frac_{y}) = MCIF_{V}(frac_{y}) o SCF_{V}(n,θ_{y})
where (f o h)(x) = f( h(x) ).

"o" is the filter composition operator. GF_{H} and GF_{V} are always 1D filters. By advantageously grouping, the interpolation filters and resampling horizontally on the one hand and vertically on the other hand, no resampled reference image, i.e. over- or subsampled, is stored in the DPB memory in addition to the reconstructed reference image.

Hence, according to the invention the operations of upsampling or subsampling of the data of the reference image and of motion compensation of a reference block are performed jointly by applying an interpolation filter successively separable on the lines and the columns of pixels of the reference block, which filter depends on the 'n' index, i.e. on the size of the reference image and on the size of the current image.

For this purpose, to calculate the value of the pixels of the prediction block Pred(Xcur,Ycur), the values Xref(Xcur),θₓ(Xcur), Yref(Ycur) and θ_{y}(Ycur) are calculated in the following manner as shown in figure 7: $\begin{matrix}MVx = {MVx}_{int} + {frac}_{x} , with {MVx}_{int} = int \left(MVx\right) \\ MVy = {MVy}_{int} + {frac}_{y} , with {MVy}_{int} = int \left(MVy\right)\end{matrix}$ $MVy = {MVy}_{int} + {frac}_{y} , with {MVy}_{int} = int \left(MVy\right)$$Xref \left(Xcur\right) = int \left(SXref.\left({MVx}_{int}+Xcur\right)/SXcur\right)$ $Yref \left(Ycur\right) = int \left(SYref.\left({MVy}_{int}+Ycur\right)/SYcur\right)$ ${θ}_{x} \left(Ycur\right) = \left(SYref . \left({MVx}_{int}+Xcur\right)/SXcur\right) - Xref$ ${θ}_{y} \left(Ycur\right) = \left(SYref . \left({MVy}_{int}+Ycur\right)/SYcur\right) - Yref$

(Xref(Xcur), Yref(Ycur)) is the position in the reference image of the current pixel with motion compensated components (Xcur, Ycur) with the integer part of MV.

(SXref, SYref ) represents the size of the reference image and (SXcur, SYcur) represents the size of the current image.

The filters GF_{H} and GF_{V} are then successively applied as shown in figure 8 to determine the prediction block Bp.

Two different current pixels (Xcur, Ycur) can be associated with the same pixel (Xref, Yref) in the reference image. They are then distinguished by their phase (θₓ, θ_{y}). Thus, to predict these two different pixels from the same reference pixel (Xref, Yref) two different filters are applied to the same pixels of the reference image according to the value of the phases.

In figure 8, the pixels {a,b,c,d} are all associated with the same value (Xref,Yref). They are distinguished by their phase:
θₓ(a) = θₓ(c)
θₓ(b) = θₓ(d)
θ_{y}(a) = θ_{y}(b)
θ_{y}(c) = θ_{y}(d)

The filters GF_{H} are first applied as follows:
u = GF_{H}(n, θₓ(a),fracₓ)(s)
v = GF_{H}(n, θₓ(b),fracₓ)(s)
s is the pixel of coordinates (Xref, Yref) in the reference image.

The filters GF_{V} are then applied to determine the pixels of Bp:
pa = GF_{V}(n, θ_{y}(a),frac_{y})(u)
pb = GF_{V}(n, θ_{y}(b),frac_{y})(v)
pc = GF_{V}(n, θ_{y}(c),frac_{y})(u)
pd = GFv(n, θ_{y}(d),frac_{y})(v)

According to a variant, GF_{V} is applied before GF_{H}. The same GF_{H or V} filters given as an example with reference to the reconstruction method can be used by the coding method.

During a step 22, the residue block is calculated from the motion compensated reference block, i.e. from the prediction block and the current block. As an illustrative example, the residue block is obtained by subtracting the prediction block pixel by pixel from the current block or yet by weighted subtraction taking into account an illumination variation model.

During a step 24, the residue block is coded for the current block into a binary stream. Typically, this step comprises the transformation of the residue block into a block of coefficients which are quantized with a quantization step then coded into binary data.

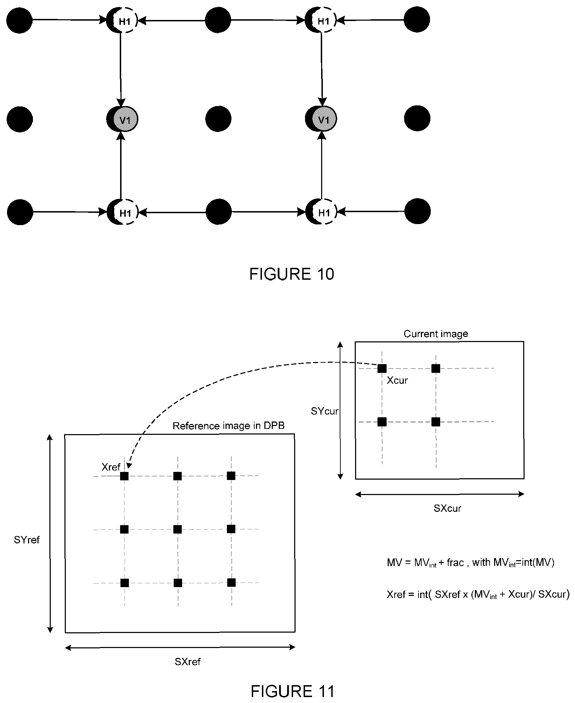

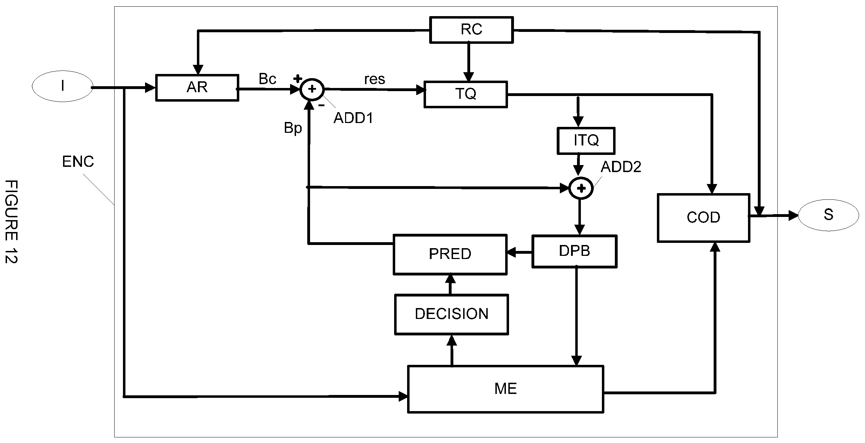

According to an embodiment variant, the filters SCF_{H}(n) and SCF_{V}(n) are separate from θₓ and θ_{y} (e.g. subsampling by 2). This variant is applicable to the reconstruction method and to the coding method. It is described in relation to figures 10, 11 and 12. Figure 10 corresponds to figure 5, figure 11 corresponds to figure 7 and figure 12 corresponds to figure 8.

According to this variant, to calculate, during steps 10 and 20, the value of the pixels of the prediction block Pred(Xcur,Ycur), the values Xref(Xcur) and Yref(Ycur) are calculated in the following manner as shown in figure 10: $MVx = {MVx}_{i} + {frac}_{x} , with {MVx}_{int} = int \left(MVx\right)$ $MVy = {MVy}_{i} + {frac}_{y} , with {MVy}_{int} = int \left(MVy\right)$ $\begin{matrix}Xref \left(Xcur\right) = int \left(SXref.\left({MVx}_{int}+{X}_{cur}\right)/SXcur\right) \\ Yref \left(Ycur\right) = int \left(SYref.\left({MVy}_{int}+{Y}_{cur}\right)/SYcur\right)\end{matrix}$$Yref \left(Ycur\right) = int \left(SYref.\left({MVy}_{int}+{Y}_{cur}\right)/SYcur\right)$

(Xref(Xcur), Yref(Ycur)) is the position in the reference image of the motion compensated current pixel with the integer part of MV.

(SXref, SYref ) represents the size of the reference image and (SXcur, SYcur) represents the size of the current image.

The filters GF_{H} and GFv are then successively applied as follows to determine the prediction block Bp.

The filters GF_{H} are first applied as follows:
u = GF_{H}(n, fracₓ)(s)

The filters GF_{V} are then applied to determine the value p of the pixels of Bp:
p = GF_{V}(n, frac_{y})(u)

According to a variant, GF_{V} is applied before GF_{H}.

The other steps of the reconstruction and coding methods are unchanged.

According to a particular embodiment of the invention, the binary stream is a scalable binary stream. The scalable binary stream comprises a base layer coding low resolution images and at least one enhancement layer coding high resolution images, i.e. the resolution of which is greater than that of the low resolution images. The current image is one of the high resolution images and the reference image is one of the low resolution images. The reconstructed low resolution images thus being used to predict the high resolution images are then stored in low resolution, i.e. in their original resolution, in the DPB memory of the enhancement layer.

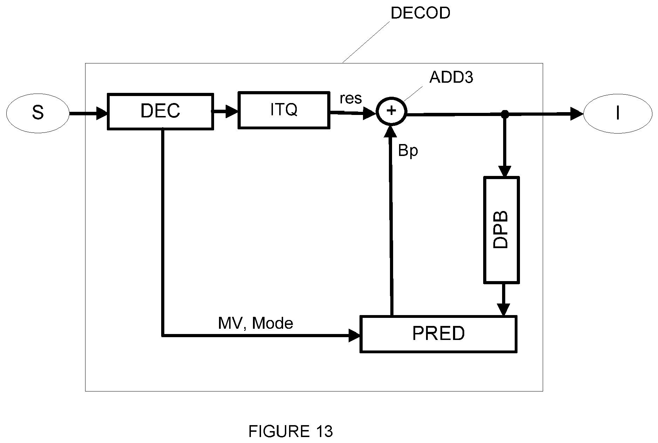

The invention further relates to a coding device ENC described with reference to figure 12 and a decoding device DECOD described with reference to figure 13. In this figure, the modules shown are functional units that may or may not correspond to physically distinguishable units. For example, these modules or some of them can be grouped together in a single component or circuit, or constitute functions of the same software. *On the contrary*, some modules may be composed of separate physical entities.

The coding device ENC receives at input images I belonging to a sequence of images. Each image is divided into blocks of pixels each of which is associated with at least one item of image data, e.g. of luminance and/or of chrominance. The coding device ENC notably implements a coding with temporal prediction. Only the modules of the coding device ENC relating to coding by temporal prediction or INTER coding are represented in figure 12. Other modules not represented and known to those skilled in the art of video coders implement the INTRA coding with or without spatial prediction. The coding device ENC notably comprises a calculation module ADD1 capable of subtracting pixel by pixel from a current block Bc a prediction block Bp to generate a residue or residual block noted res. It further comprises a module TQ capable of transforming then quantizing the residual block res into quantized data. The transform T is for example a DCT. The coding device ENC further comprises an entropy coding module COD able to code the quantized data into a binary stream S. It further comprises a module ITQ carrying out the reverse operation of module TQ. The module ITQ carries out a reverse quantization followed by an inverse transform. The module ITQ is connected to a calculation module ADD2 able to add pixel by pixel the block of data from the module ITQ and the prediction block Bp to generate a block of reconstructed image data that is stored in a DPB memory. The module AR is able to subsample the images at the input of the coder notably with a view to improving the bitrate-distortion compromise, i.e. notably to increase the constant bitrate reconstruction quality, the bitrate being determined by a bitrate control module.

The coding device ENC further comprises a motion estimation module ME able to estimate at least one motion vector MV between the block Bc and a reference image Ir stored in the DPB memory or between the block Bc and the version Ir' of the resampled reference image Ir at the size of the current image. According to one variant, the motion estimation is made between the current block Bc and the source image corresponding to Ir, in which case the DPB memory is not connected to the motion estimation module ME. The motion data are transmitted by the motion estimation module ME to a decision module DECISION able to select a coding mode for the block Bc in a predefined set of coding modes. The chosen coding mode is for example the one that minimises a bitrate-distortion type criterion. However, the invention is not restricted to this selection method and the mode chosen can be selected according to another criterion for example an a priori type criterion. The coding mode selected by the decision module DECISION as well as the motion data, for example the motion vector or vectors in the case of the temporal prediction mode or INTER mode are transmitted to a prediction module PRED, also called motion compensation module. The motion vector or vectors and the selected coding mode are moreover transmitted to the entropy coding module COD to be coded in the stream S. If a coding mode INTER is retained by the decision module DECISION the prediction module PRED then determines from the reference image Ir previously reconstructed and stored in the DPB memory, the prediction block Bp from the motion vector MV determined by the motion estimation module ME. The prediction module PRED is able to determine the prediction block according to step 20 of the coding method described with reference to figure 9. The calculation module ADD1 is able to implement step 22 of the coding method. Step 24 of the coding method is implemented by the modules TQ and COD.

The decoding device DECOD is described with reference to figure 13. The decoding device DECOD receives at input a binary stream S representative of a sequence of images. The stream S is for example transmitted by a coding device ENC. The decoding device DECOD comprises an entropy decoding module DEC able to generate decoded data, for example coding modes and decoded data relating to the content of the images. The decoding device DECOD further comprises a motion data reconstruction module. According to a first embodiment, the motion data reconstruction module is the entropic decoding module DEC that decodes a part of the stream S representative of motion vectors.

According to a variant not shown in figure 9, the motion data reconstruction module is a motion estimation module. This solution for reconstructing motion data by the decoding device DECOD is known as "template matching".

The decoded data relating to the content of the pictures is then sent to a module ITQ capable of carrying out a reverse quantization followed by an inverse transformation. The module ITQ is identical to the module ITQ of the coding device ENC having generated the stream S. The module ITQ is connected to a calculation module ADD3 able to add pixel by pixel the block from the module ITQ and a prediction block Bp to generate a block of reconstructed image data that is stored in a DPB memory. The decoding device DECOD further comprises a prediction module PRED identical to the prediction module PRED of the coding device 12. If a coding mode INTER is decoded, the prediction module PRED determines from a reference image Ir previously reconstructed and stored in the DPB memory, the reference block Bp from the motion vector Vp decoded for the current block Bc by the entropy decoding module DEC.

The prediction module PRED is able to determine the prediction block according to step 10 of the reconstruction method described with reference to figure 6. The calculation module ADD3 is able to implement step 14 of the reconstruction method. Step 12 of the reconstruction method is implemented by the modules DEC and ITQ.

## Claims

1. A decoding method of a binary stream to reconstruct a current block of a current image from a reference block of a reference image reconstructed at a size different from a size of the current image comprising:
- resampling and motion compensating (10) the reference block by applying a single horizontal filter on lines of the reference block and by applying a single vertical filter on columns of the reference block;
- decoding (12), for the current block, a residue block, and
- reconstructing (14) the current block from the residue block and from the resampled and motion compensated reference block,
the method being **characterized in that** the single horizontal filter and the single vertical filter depend on the size at which is reconstructed the reference image and on the size of the current image and the single horizontal filter is composed of a horizontal sub-pixel interpolation filter and of a horizontal resampling filter and the single vertical filter is composed of a vertical sub-pixel interpolation filter and of a vertical resampling filter.

2. the decoding method according to claim 1, wherein the single horizontal filter and the single vertical filter are defined by filtering coefficients, the decoding method further comprises a decoding step of the filtering coefficients.

3. The decoding method according to one of claims 1 to 2, wherein the binary stream is a scalable stream comprising a base layer coding low resolution images and at least one enhancement layer coding high resolution images, the current image is one of the high resolution images and the reference image is one of the low resolution images.

4. A coding method of a current block of a current image from a reference block of a reference image reconstructed at a size different from a size of the current image comprising:
- resampling and motion compensating (20) the reference block with a single filter by applying a single
horizontal filter on lines of the reference block and by applying a single vertical filter on columns of the reference block,
- obtaining (22), for the current block, a residue block from the current block and from the resampled and motion compensated reference block, and
- coding (24) the residue block in a binary stream,
the method being **characterized in that** the single horizontal filter and the single vertical filter depend on the size at which is reconstructed the reference image and on the size of the current image and the single horizontal filter is composed of a horizontal sub-pixel interpolation filter and of a horizontal resampling filter and the single vertical filter is composed of a vertical sub-pixel interpolation filter and of a vertical resampling filter.

5. The coding method according to claim 4, wherein the single horizontal filter and the single vertical filter are defined by filtering coefficients, the coding method further comprises a coding step of the filtering coefficients.

6. The coding method according to one of claims 4 to 5, wherein the binary stream is a scalable stream comprising a base layer coding low resolution images and at least one enhancement layer coding high resolution images, the current image is one of the high resolution images and the reference image is one of the low resolution images.

7. A device (DECOD) for decoding a binary stream to reconstruct a current block of a current image from a reference block of a reference image reconstructed at a size different from a size of the current image comprising:
- means for resampling and motion compensating (PRED) the reference block by applying a single
horizontal filter on lines of the reference block and by applying a single vertical filter on columns of the reference block,
- means to decode (DEC, ITQ), for the current block, a residue block, and
- means to reconstruct (ADD3) the current block from the residue block and from the resampled and motion compensated reference block,
the decoding device being **characterized in that** the single horizontal filter and the single vertical filter depend on the size at which is reconstructed the reference image and on the size of the current image and the single horizontal filter is composed of a horizontal sub-pixel interpolation filter and of a horizontal resampling filter and the single vertical filter is composed of a vertical sub-pixel interpolation filter and of a vertical resampling filter.

8. The device according to claim 7, wherein the device is suitable to execute the decoding method according to one of claims 2 to 3.

9. A device (ENC) for encoding a current block of a current image from at least one reference block of a reference image reconstructed at a size different from the size of the current image comprising:
- means for resampling and motion compensating (PRED) the reference block by applying a single
horizontal filter on lines of the reference block and by applying a single vertical filter on columns of the reference block,
- means to obtain (ADD1), for the current block, a residue block from the current block and from the resampled and motion compensated reference block, and
- means to code (TQ, COD) the residue block,
the coding device being **characterized in that** the single horizontal filter and the single vertical filter depend on the size at which is reconstructed the reference image and on the size of the current image and the single horizontal filter is composed of a horizontal sub-pixel interpolation filter and of a horizontal resampling filter and the single vertical filter is composed of a vertical sub-pixel interpolation filter and of a vertical resampling filter.

10. The device according to claim 9, wherein the device is adapted to execute the coding method according to one of claims 5 to 6.

## Patentansprüche

1. Decodierungsverfahren eines binären Datenstroms zum Rekonstruieren eines gegenwärtigen Blocks eines gegenwärtigen Bilds aus einem Referenzblock eines Referenzbilds, das mit einer anderen Größe als einer Größe des gegenwärtigen Bilds rekonstruiert wird, wobei das Decodierungsverfahren umfasst:
- Neuabtasten und Bewegungskompensieren (10) des Referenzblocks durch Anwenden eines einzelnen horizontalen Filters auf Zeilen des Referenzblocks und durch Anwenden eines einzelnen vertikalen Filters auf Spalten des Referenzblocks;
- Decodieren (12) eines Restblocks für den gegenwärtigen Block, und
- Rekonstruieren (14) des gegenwärtigen Blocks aus dem Restblock und aus dem neuabgetasteten und bewegungskompensierten Referenzblock,
wobei das Verfahren **dadurch gekennzeichnet ist, dass** das einzelne horizontale Filter und das einzelne vertikale Filter von der Größe, mit der das Referenzbild rekonstruiert wird, und von der Größe des gegenwärtigen Bilds abhängen und wobei das einzelne horizontale Filter aus einem horizontalen Subpixel-Interpolationsfilter und aus einem horizontalen Neuabtastungsfilter zusammengesetzt ist und wobei das einzelne vertikale Filter aus einem vertikalen Subpixel-Interpolationsfilter und aus einem vertikalen Neuabtastungsfilter zusammengesetzt ist.

2. Decodierungsverfahren nach Anspruch 1, wobei das einzelne horizontale Filter und das einzelne vertikale Filter durch Filterungskoeffizienten definiert sind, wobei das Decodierungsverfahren ferner einen Decodierungsschritt der Filterungskoeffizienten umfasst.

3. Decodierungsverfahren nach einem der Ansprüche 1 bis 2, wobei der binäre Datenstrom ein skalierbarer Datenstrom ist, der niedrigauflösende Basisschichtcodierungs-Bilder und mindestens ein hochauflösendes Erweiterungsschichtcodierungs-Bild umfasst, wobei das gegenwärtige Bild eines der hochauflösenden Bilder ist und das Referenzbild eines der niedrigauflösenden Bilder ist.

4. Codierungsverfahren eines gegenwärtigen Blocks eines gegenwärtigen Bilds aus einem Referenzblock eines Referenzbilds, das mit einer anderen Größe als einer Größe des gegenwärtigen Bilds rekonstruiert wird, wobei das Codierungsverfahren umfasst:
- Neuabtasten und Bewegungskompensieren (20) des Referenzblocks mit einem einzelnen Filter durch Anwenden eines einzelnen horizontalen Filters auf Zeilen des Referenzblocks und durch Anwenden eines einzelnen vertikalen Filters auf Spalten des Referenzblocks;
- Erhalten (22) eines Restblocks aus dem gegenwärtigen Block und aus dem neuabgetasteten und bewegungskompensierten Referenzblock für den gegenwärtigen Block, und
- Codieren (24) des Restblocks in einem binären Datenstrom,
wobei das Verfahren **dadurch gekennzeichnet ist, dass** das einzelne horizontale Filter und das einzelne vertikale Filter von der Größe, mit der das Referenzbild rekonstruiert wird, und von der Größe des gegenwärtigen Bilds abhängen und wobei das einzelne horizontale Filter aus einem horizontalen Subpixel-Interpolationsfilter und aus einem horizontalen Neuabtastungsfilter zusammengesetzt ist und wobei das einzelne vertikale Filter aus einem vertikalen Subpixel-Interpolationsfilter und aus einem vertikalen Neuabtastungsfilter zusammengesetzt ist.

5. Codierungsverfahren nach Anspruch 4, wobei das einzelne horizontale Filter und das einzelne vertikale Filter durch Filterungskoeffizienten definiert sind, wobei das Codierungsverfahren ferner einen Codierungsschritt der Filterungskoeffizienten umfasst.

6. Codierungsverfahren nach einem der Ansprüche 4 bis 5, wobei der binäre Datenstrom ein skalierbarer Datenstrom ist, der niedrigauflösende Basisschichtcodierungs-Bilder und mindestens ein hochauflösendes Erweiterungsschichtcodierungs-Bild umfasst, wobei das gegenwärtige Bild eines der hochauflösenden Bilder ist und das Referenzbild eines der niedrigauflösenden Bilder ist.

7. Vorrichtung (DECOD) zum Decodieren eines binären Datenstroms zum Rekonstruieren eines gegenwärtigen Blocks eines gegenwärtigen Bilds aus einem Referenzblock eines Referenzbilds, das mit einer anderen Größe als einer Größe des gegenwärtigen Bilds rekonstruiert wird, wobei die Vorrichtung umfasst:
- Mittel (PRED) zum Neuabtasten und Bewegungskompensieren des Referenzblocks durch Anwenden eines einzelnen horizontalen Filters auf Zeilen des Referenzblocks und durch Anwenden eines einzelnen vertikalen Filters auf Spalten des Referenzblocks;
- Mittel (DEC, ITQ) zum Decodieren eines Restblocks für den gegenwärtigen Block, und
- Mittel (ADD3) zum Rekonstruieren des gegenwärtigen Blocks aus dem Restblock und aus dem neuabgetasteten und bewegungskompensierten Referenzblock,
wobei die Decodierungsvorrichtung **dadurch gekennzeichnet ist, dass** das einzelne horizontale Filter und das einzelne vertikale Filter von der Größe, mit der das Referenzbild rekonstruiert wird, und von der Größe des gegenwärtigen Bilds abhängen und wobei das einzelne horizontale Filter aus einem horizontalen Subpixel-Interpolationsfilter und aus einem horizontalen Neuabtastungsfilter zusammengesetzt ist und wobei das einzelne vertikale Filter aus einem vertikalen Subpixel-Interpolationsfilter und aus einem vertikalen Neuabtastungsfilter zusammengesetzt ist.

8. Vorrichtung nach Anspruch 7, wobei die Vorrichtung geeignet ist, das Decodierungsverfahren nach einem der Ansprüche 2 bis 3 auszuführen.

9. Vorrichtung (ENC) zum Codieren eines gegenwärtigen Blocks eines gegenwärtigen Bilds aus mindestens einem Referenzblock eines Referenzbilds, das mit einer anderen Größe als der Größe des gegenwärtigen Bilds rekonstruiert wird, wobei die Vorrichtung umfasst:
- Mittel (PRED) zum Neuabtasten und Bewegungskompensieren des Referenzblocks durch Anwenden eines einzelnen horizontalen Filters auf Zeilen des Referenzblocks und durch Anwenden eines einzelnen vertikalen Filters auf Spalten des Referenzblocks;
- Mittel (ADD1) zum Erhalten eines Restblocks aus dem gegenwärtigen Block und aus dem neuabgetasteten und bewegungskompensierten Referenzblock für den gegenwärtigen Block, und
- Mittel (TQ, COD) zum Codieren des Restblocks,
wobei die Codierungsvorrichtung **dadurch gekennzeichnet ist, dass** das einzelne horizontale Filter und das einzelne vertikale Filter von der Größe, mit der das Referenzbild rekonstruiert wird, und von der Größe des gegenwärtigen Bilds abhängen und wobei das einzelne horizontale Filter aus einem horizontalen Subpixel-Interpolationsfilter und aus einem horizontalen Neuabtastungsfilter zusammengesetzt ist und wobei das einzelne vertikale Filter aus einem vertikalen Subpixel-Interpolationsfilter und aus einem vertikalen Neuabtastungsfilter zusammengesetzt ist.

10. Vorrichtung nach Anspruch 9, wobei die Vorrichtung dafür ausgelegt ist, das Codierungsverfahren nach einem der Ansprüche 5 bis 6 auszuführen.

## Revendications

1. Procédé de décodage d'un flux binaire pour reconstruire un bloc courant d'une image courante à partir d'un bloc de référence d'une image de référence reconstruite à une taille différente d'une taille de l'image courante, comprenant :
- le rééchantillonnage et la compensation de mouvement (10) du bloc de référence en appliquant un filtre horizontal unique sur les lignes du bloc de référence et en appliquant un filtre vertical unique sur les colonnes du bloc de référence ;
- le décodage (12), pour le bloc courant, d'un bloc résiduel ; et
- la reconstruction (14) du bloc courant à partir du bloc résiduel et du bloc de référence rééchantillonné et compensé en mouvement,
le procédé étant **caractérisé en ce que** le filtre horizontal unique et le filtre vertical unique dépendent de la taille à laquelle l'image de référence est reconstruite et de la taille de l'image courante, et le filtre horizontal unique est composé d'un filtre horizontal d'interpolation sous-pixel et d'un filtre horizontal de rééchantillonnage, et le filtre vertical unique est composé d'un filtre vertical d'interpolation sous-pixel et d'un filtre vertical de rééchantillonnage.

2. Procédé de décodage selon la revendication 1, dans lequel le filtre horizontal unique et le filtre vertical unique sont définis par des coefficients de filtrage, le procédé de décodage comprenant en outre une étape de décodage des coefficients de filtrage.

3. Procédé de décodage selon l'une des revendications 1 à 2, dans lequel le flux binaire est un flux évolutif comprenant une couche de base codant des images basse résolution et au moins une couche d'amélioration codant des images haute résolution, l'image courante est l'une des images haute résolution et l'image de référence est l'une des images basse résolution.

4. Procédé de codage d'un bloc courant d'une image courante à partir d'un bloc de référence d'une image de référence reconstruite à une taille différente d'une taille de l'image courante, comprenant :
- le rééchantillonnage et la compensation de mouvement (20) du bloc de référence avec un filtre unique en appliquant un filtre horizontal unique sur les lignes du bloc de référence et en appliquant un filtre vertical unique sur les colonnes du bloc de référence,
- l'obtention (22), pour le bloc courant, d'un bloc résiduel à partir du bloc courant et du bloc de référence rééchantillonné et compensé en mouvement, et
- le codage (24) du bloc résiduel dans un flux binaire,
le procédé étant **caractérisé en ce que** le filtre horizontal unique et le filtre vertical unique dépendent de la taille à laquelle l'image de référence est reconstruite et de la taille de l'image courante, et le filtre horizontal unique est composé d'un filtre horizontal d'interpolation sous-pixel et d'un filtre horizontal de rééchantillonnage, et le filtre vertical unique est composé d'un filtre vertical d'interpolation sous-pixel et d'un filtre vertical de rééchantillonnage.

5. Procédé de codage selon la revendication 4, dans lequel le filtre horizontal unique et le filtre vertical unique sont définis par des coefficients de filtrage, le procédé de codage comprenant en outre une étape de codage des coefficients de filtrage.

6. Procédé de codage selon l'une des revendications 4 à 5, dans lequel le flux binaire est un flux évolutif comprenant une couche de base codant des images basse résolution et au moins une couche d'amélioration codant des images haute résolution, l'image courante est l'une des images haute résolution et l'image de référence est l'une des images basse résolution.

7. Dispositif (DECOD) de décodage d'un flux binaire pour reconstruire un bloc courant d'une image courante à partir d'un bloc de référence d'une image de référence reconstruite à une taille différente d'une taille de l'image courante, comprenant :
- un moyen pour rééchantillonner et compenser en mouvement (PRED) le bloc de référence en appliquant un filtre horizontal unique sur les lignes du bloc de référence et en appliquant un filtre vertical unique sur les colonnes du bloc de référence,
- un moyen pour décoder (DEC, ITQ), pour le bloc courant, un bloc résiduel, et
- un moyen pour reconstruire (ADD3) le bloc courant à partir du bloc résiduel et du bloc de référence rééchantillonné et compensé en mouvement,
le dispositif de décodage étant **caractérisé en ce que** le filtre horizontal unique et le filtre vertical unique dépendent de la taille à laquelle l'image de référence est reconstruite et de la taille de l'image courante, et le filtre horizontal unique est composé d'un filtre horizontal d'interpolation sous-pixel et d'un filtre horizontal de rééchantillonnage, et le filtre vertical unique est composé d'un filtre vertical d'interpolation sous-pixel et d'un filtre vertical de rééchantillonnage.

8. Dispositif selon la revendication 7, dans lequel le dispositif est adapté à l'exécution du procédé de décodage selon l'une des revendications 2 à 3.

9. Dispositif (ENC) de codage d'un bloc courant d'une image courante à partir d'au moins un bloc de référence d'une image de référence reconstruite à une taille différente de la taille de l'image courante, comprenant :
- un moyen pour rééchantillonner et compenser en mouvement (PRED) le bloc de référence en appliquant un filtre horizontal unique sur les lignes du bloc de référence et en appliquant un filtre vertical unique sur les colonnes du bloc de référence,
- un moyen pour obtenir (ADD1), pour le bloc courant, un bloc résiduel à partir du bloc courant et du bloc de référence rééchantillonné et compensé en mouvement, et
- un moyen pour coder (TQ, COD) le bloc résiduel,
le dispositif de codage étant **caractérisé en ce que** le filtre horizontal unique et le filtre vertical unique dépendent de la taille à laquelle l'image de référence est reconstruite et de la taille de l'image courante, et le filtre horizontal unique est composé d'un filtre horizontal d'interpolation sous-pixel et d'un filtre horizontal de rééchantillonnage, et le filtre vertical unique est composé d'un filtre vertical d'interpolation sous-pixel et d'un filtre vertical de rééchantillonnage.

10. Dispositif selon la revendication 9, dans lequel le dispositif est adapté à l'exécution du procédé de codage selon l'une des revendications 5 à 6.
